# FASCICULE DE BREVET EUROPEEN

(11) **EP 2 303 636 B1**
(45) Date de publication et mention de la délivrance du brevet: **17.08.2016**
(21) Numéro de dépôt: 09772559.2
(22) Date de dépôt: 03.07.2009
(51) Int. Cl.: B60Q 1/14, B60R 16/03

(54) **ENSEMBLE DE COMMUTATION POUR HAUT DE COLONNE DE DIRECTION DE VÉHICULE AUTOMOBILE, ENSEMBLE ET PROCÉDÉ DE COMMANDE CORRESPONDANTS**
SCHALTANORDNUNG FÜR DEN OBERTEIL EINER KRAFTFAHRZEUGLENKSÄULE UND ENTSPRECHENDE(S) STEUERANORDNUNG UND VERFAHREN
SWITCHING ASSEMBLY FOR THE TOP PORTION OF AN AUTOMOBILE STEERING COLUMN, AND CORRESPONDING CONTROL ASSEMBLY AND METHOD

(30) Priorité: 03.07.2008 FR 0803762
(43) Date de publication de la demande: 06.04.2011
(73) Titulaire: SC2N, 94000 Créteil (FR)
(72) Inventeur: HALLET, Michel, F-14120 Mondeville (FR)
(74) Mandataire: Croonenbroek, Thomas Jakob
(86) Numéro de dépôt international: PCT/EP2009/058460
(87) Numéro de publication internationale: WO 2010/000859

(56) Documents cités:
- EP-A- 0 147 110
- WO-A-2004/098950
- WO-A-2007/028887
- JP-A- 61 132 446
- US-A- 4 455 454

## Description

La présente invention concerne un ensemble de commutation pour haut de colonne de direction de véhicule automobile, un ensemble de commande et un procédé de commande correspondants.

On connaît largement dans la technique, des ensembles de commande pour un haut de colonne de direction de véhicule automobile.

De tels ensembles regroupent dans un même système plusieurs modules de commutation pour par exemple, commander des phares, des essuie-glaces, des fonctions audio, des fonctions de téléphonie ou encore des régulateurs de vitesse, reliés à un ensemble de commutation sous-volant.

Un ensemble de commutation comporte habituellement un support de base possédant une pluralité d'emplacements pouvant être reliés à des connecteurs de module de commutation, chaque module de commutation ayant au moins un commutateur pouvant prendre un état de commutation en fonction de la position de commande appliquée par un utilisateur.

Pour la gestion des commandes, le document WO2007/028887 propose un ensemble de commutation comportant un microcontrôleur configuré pour activer périodiquement au niveau de chaque emplacement la lecture des états de commutation des modules.

La présente invention vise à proposer un système de commutation simplifié et plus performant de celui de l'état de la technique à un coût réduit.

A cet effet, l'invention a pour objet un ensemble de commutation pour haut de colonne de direction de véhicule automobile comportant :
- un support de base possédant une pluralité d'emplacements pouvant être reliés à des connecteurs de module de commutation, chaque module de commutation ayant au moins un commutateur pouvant prendre un état de commutation en fonction de la position de commande appliquée par un utilisateur,
- un microcontrôleur de gestion de l'ensemble de commutation,

caractérisé en ce que chaque emplacement comprend au moins deux entrées numériques reliées à des mêmes sorties numériques dudit microcontrôleur et au moins deux sorties numériques reliées à des mêmes entrées numériques dudit microcontrôleur, et en ce que ledit microcontrôleur est configuré de manière à pouvoir déduire à partir d'une séquences de signaux numériques envoyés par ledit microcontrôleur en direction de chaque emplacement et des signaux numériques reçus par ledit microcontrôleur depuis chaque emplacement et correspondant à des signaux électriques ayant transités par un module de commutation branché à un emplacement, au moins un état de commutation d'un commutateur dudit module de commutation.

Les possibilités de codage sont alors très élevées. Le système de commutation est donc simplifié, plus performant et présente un coût réduit.

Chaque emplacement peut posséder le même nombre prédéfini de plages de connexions. Ainsi, la connectique électrique est standardisée et est identique pour tous les modules de commutation pouvant être raccordés sur le support de base. On peut ainsi raccorder des modules de commutation affectés à des fonctions différentes à différents emplacements du support de base.

Le microcontrôleur peut être configuré pour recevoir une information numérique comportant en outre un identifiant associé à l'emplacement dudit module. Etant donné que les modules de commutation peuvent présenter une connectique identique, l'identifiant associé à l'emplacement du module de commutation permet alors de reconnaître à quelles fonctions le module est dédié.

L'invention a aussi pour objet un ensemble de commande pour haut de colonne de direction de véhicule automobile caractérisé en ce qu'il comporte un ensemble de commutation tel que décrit précédemment, et au moins un module de commutation branché à un emplacement de l'ensemble de commutation, ledit module ayant au moins un commutateur pouvant prendre un état de commutation en fonction d'une position de commande appliquée par un utilisateur.

Selon un mode de réalisation, un nombre prédéfini de commutateurs d'un module sont reliés d'une part respectivement à un nombre identique de sorties dudit microcontrôleur et d'autre part, à une unique entrée dudit microcontrôleur. Par exemple, pour déterminer les états de commutation d'une vingtaine de commutateurs, il suffit de câbler quatre commutateurs d'une part à quatre sorties d'un microcontrôleur et d'autre part, à une unique entrée du microcontrôleur. Quatre sorties et cinq entrées sont donc suffisantes au lieu de vingt entrées et vingt sorties. On diminue ainsi de façon importante le nombre de sorties du microcontrôleur et le câblage nécessaire pour déterminer les états de commutation des commutateurs.

Selon différentes caractéristiques de l'ensemble de commande,
- le commutateur du module de commutation comporte des éléments de contactage et un organe de commutation correspondant, la position de l'organe de commutation définissant une combinaison de contacts fournissant une information numérique en entrée dudit microcontrôleur relative à un état du commutateur,
- les éléments de contactage sont inscrits dans une bande d'arc de cercle d'un support dudit module et ledit organe de commutation est monté rotatif sur ledit support,
- les éléments de contactage sont doublés pour chaque position de l'organe de commutation à l'exception d'une position centrale ; le doublage des éléments de contactage permet de sécuriser l'acheminement des signaux électriques en transit,
- les éléments de contactage sont disposés de manière que les états de commutation soient fermés dans une position centrale de l'organe de commutation, pour réaliser un test de fonctionnement dudit module.

L'invention a encore pour objet un procédé de commande pour haut de colonne de direction de véhicule automobile caractérisé en ce qu'il comporte un ensemble de commande tel que décrit précédemment pour la mise en oeuvre des étapes suivantes :
- une première étape dans laquelle on envoie à tour de rôle et périodiquement pour chaque emplacement une séquence de signaux numériques par ledit microcontrôleur,
- une deuxième étape dans laquelle on reçoit depuis chaque emplacement, par ledit microcontrôleur, des signaux numériques correspondants associés à des signaux électriques ayant transités par un module de commutation branché sur ledit emplacement et on déduit à partir desdites séquences de signaux numériques envoyés et desdits signaux numériques correspondants reçus, au moins un état de commutation d'un commutateur dudit module de commutation,
- une troisième étape dans laquelle on associe les états de commutation à une série de signaux de commande correspondants et on délivre les signaux de commande correspondants aux éléments devant être commandés et,
- on réitère lesdites étapes.

Au cours de la deuxième étape, on peut déduire également à partir desdites séquences de signaux numériques envoyés et desdits signaux numériques correspondants reçus, au moins un identifiant associé à l'emplacement dudit module.

Au cours de la deuxième étape, on peut mémoriser l'état de commutation d'une deuxième étape précédente, on compare l'état de commutation avec l'état de commutation mémorisé, et en cas de changement de l'état de commutation, on réitère la deuxième étape, jusqu'à ce que l'état de commutation soit identique au moins à celui mémorisé. On s'assure ainsi que l'utilisateur a bien souhaité un changement d'état avant de rendre celui-ci effectif.

D'autres avantages et caractéristiques apparaîtront à la lecture de la description de l'invention, ainsi que des dessins annexés sur lesquels :
- la figure 1 est une vue schématique d'un ensemble de commande,
- la figure 2 est un schéma synoptique de connexion d'un ensemble de commutation de l'ensemble de commande de la figure 1,
- la figure 3 est un schéma synoptique de connexion d'une partie des circuits électriques d'un autre exemple d'ensemble de commande,
- la figure 4a est une vue schématique d'éléments d'un exemple de module de commutation,
- la figure 4b est un tableau représentatif des informations numériques codées par la figure 4a,
- la figure 4c est un schéma synoptique de connexion d'une partie des circuits électriques d'un ensemble de commande comprenant le module de commutation de la figure 4a, et
- la figure 5 représente un organigramme d'un procédé de commande mettant en oeuvre un ensemble de commande.

Sur ces figures, les éléments identiques portent les mêmes numéros de référence. Par souci de clarté, les étapes du procédé de commande sont numérotées à partir de 100.

L'invention concerne un ensemble de commande pour haut de colonne de direction de véhicule automobile comportant un ensemble de commutation.

L'ensemble de commande est destiné à être monté sur une colonne de direction d'un véhicule automobile, au-dessous d'un volant (non représenté).

Au moins un module de commutation peut être branché à un emplacement de l'ensemble de commutation, chaque module ayant au moins un commutateur pouvant prendre un état de commutation en fonction d'une position de commande appliquée par un utilisateur.

Pour cela, l'ensemble de commutation comporte un support de base possédant une pluralité d'emplacements pouvant être reliés à des connecteurs de module de commutation et un microcontrôleur de gestion de l'ensemble de commutation. Chaque emplacement possède en outre le même nombre prédéfini de plages de connexions pour relier un nombre prédéfini d'entrées e et de sorties s du microcontrôleur à un module de commutation.

En outre, les modules de commutation possèdent d'une part une mécatronique intrinsèque et propre qui traduit un mouvement d'un utilisateur en un changement d'état de commutation et d'autre part une connectique mécanique et électrique au support qui est standardisée pour être identique pour tous les modules pouvant être raccordés sur le support de base de sorte que chaque module de commutation puisse être mécaniquement raccordé dans chaque emplacement du support.

Les modules de commutation sont ainsi mécaniquement raccordés dans un emplacement du support de base et en même temps, connectés électriquement.

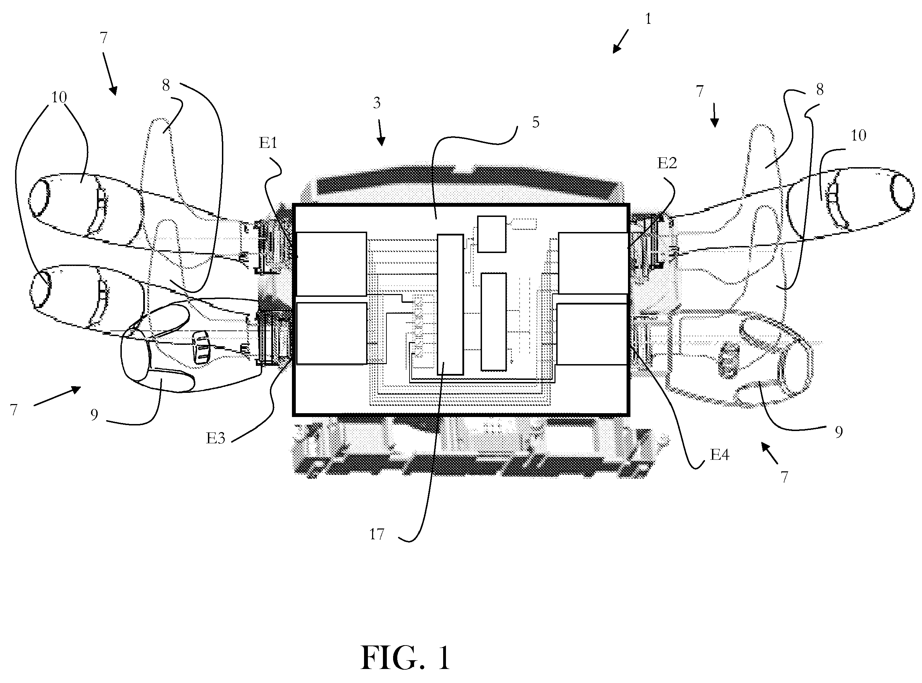

La figure 1 illustre un exemple d'ensemble de commande 1 comportant un ensemble de commutation 3 dont le support de base 5 présente quatre emplacements E1, E2, E3, E4, disposés par paire sur des côtés opposés du support de base 5, pour accueillir des modules de commutation 7 tels qu'un module d'éclairage ou un module de commutation des essuie-glaces, un module de commutation de fonctions audio ou un module de commutation de régulation de vitesse, un module de commutation de téléphone ou d'un système de navigation.

Dans cet exemple, chaque emplacement possède le même nombre prédéfini de plages de connexions et les modules de commutation sont standardisés. Ainsi, trois types de modules de commutation différents 8, 9, 10 sont représentés en lignes fantômes superposées de manière à illustrer leur interchangeabilité aux différents emplacements E1, E2, E3, E4 du support de base 5.

Bien entendu, selon le besoin, on peut envisager un nombre plus élevé de modules de commutation 7 aussi bien en ce qui concerne leur nombre pour un seul support 5 que pour leurs fonctionnalités.

Chaque emplacement E1, E2, E3, E4 comprend au moins deux entrées numériques reliées à des mêmes sorties numériques s1, s2 du microcontrôleur 17 et au moins deux sorties numériques reliées à des mêmes entrées numériques e1, e2, e3, e4 du microcontrôleur 17.

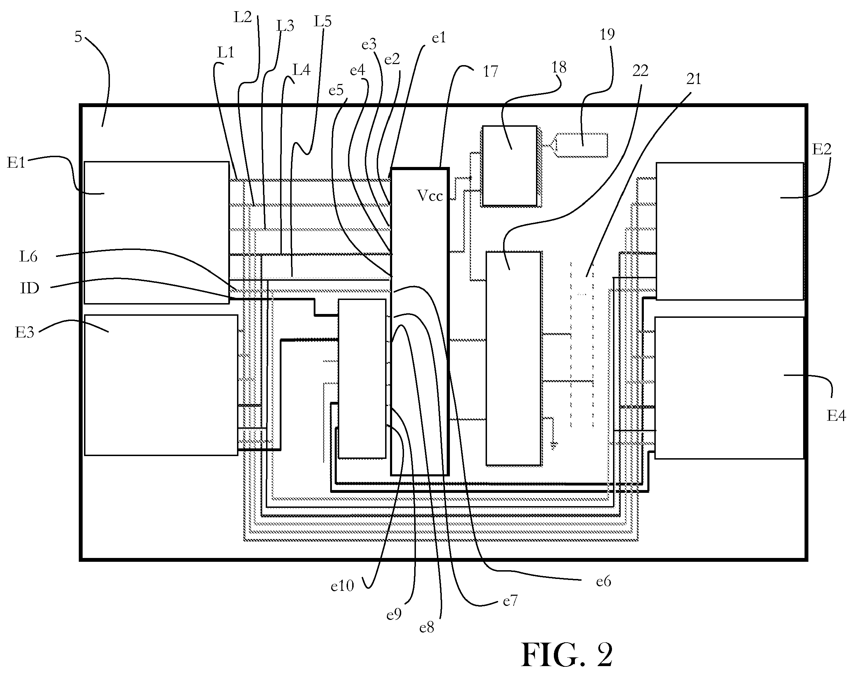

Plus précisément et comme visible sur la figure 2, chaque emplacement E1, E2, E3, E4 comporte par exemple sept plages de connexion L1, L2, L3, L4, L5, L6, ID qui peuvent être reliées d'une part à des pistes de connexion associées du module 7 et d'autre part, aux entrées e1, e2, e3, e4, e5, e6, e7 du microcontrôleur 17.

Ainsi dans cet exemple, pour l'emplacement E1, parmi les sept plages, six plages L1, L2, L3, L4, L5, L6 sont reliées aux entrées e1, e2, e3, e4, e5, e6, et servent à transmettre des états de commutation du module 7 et une plage ID sert pour l'adressage et est reliée à l'entrée e7.

Chacun des quatre emplacements E1, E2, E3 et E4 comporte ainsi une plage de connexion ID dédiée à l'adressage et reliée à une entrée dédiée e7, e8, e9 et e10 du microcontrôleur 17.

Bien entendu, on peut envisager selon le besoin un nombre supérieur ou inférieur de plages de connexions à la fois pour la transmission de l'état de commutation ou pour la transmission de l'identifiant au microcontrôleur 17 si on respecte la règle que le nombre N de plages de connexion est identique pour tous les emplacements E1 à E4 et pour tous les modules 7.

Les plages de connexion L1, L2, L3, L4, L5, L6 de chaque emplacement E1 à E4 sont connectées et raccordées ensemble sur la même entrée e1, e2, e3, e4, e5, e6 du microcontrôleur 17 de manière à simplifier le câblage électrique. On réduit ainsi le nombre d'entrées du microcontrôleur 17 nécessaires pour traiter les informations issues de chaque emplacement E1, E2 E3, E4 de l'ensemble de commutation.

Le microcontrôleur 17 est configuré de manière à pouvoir déduire à partir d'une séquences de signaux numériques envoyés par le microcontrôleur 17 en direction de chaque emplacement et des signaux numériques reçus par le microcontrôleur 17 depuis chaque emplacement E1, E2, E3, E4 et correspondant à des signaux électriques ayant transités par un module de commutation branché à un emplacement, au moins un état de commutation d'un commutateur du module de commutation.

Chaque séquence comporte un train d'impulsions envoyé sur chaque sortie. Le train d'impulsion comporte par exemple une succession de pulses de courant définissant par exemple une information binaire, telle que : « 010101010... ». Pour chaque emplacement, les séquences de signaux numériques sont envoyées successivement et cycliquement sur chaque sortie.

Selon un premier exemple, on envoie ainsi tour à tour un pulse de courant en alternance vers chaque sortie.

Selon un deuxième exemple, on envoie une première séquence comportant une succession de pulses de courant définissant par exemple une information binaire, telle que : « 010101010... » sur une première sortie pendant une durée prédéterminée tandis que rien n'est envoyé sur la deuxième sortie. Puis, on envoie une deuxième séquence sur la deuxième sortie pendant une durée prédéterminée tandis que rien n'est envoyé sur la première sortie.

Le microcontrôleur 17 est en outre configuré pour recevoir une information numérique comportant un identifiant associé à l'emplacement E1, E2, E3, E4 du module 7.

Par ailleurs, on peut également envisager que l'information numérique déduite par le microcontrôleur 17 contienne également un identifiant de l'emplacement E1 à E4 et du type du module 7 raccordé à l'ensemble de commutation 3. Les informations numériques sont alors différentes selon le module de commutation dans lequel les signaux électriques correspondants ont transités de sorte que l'identification du module de commutation est ainsi directement déduite de l'information numérique sans nécessiter de plage de connexion dédiée.

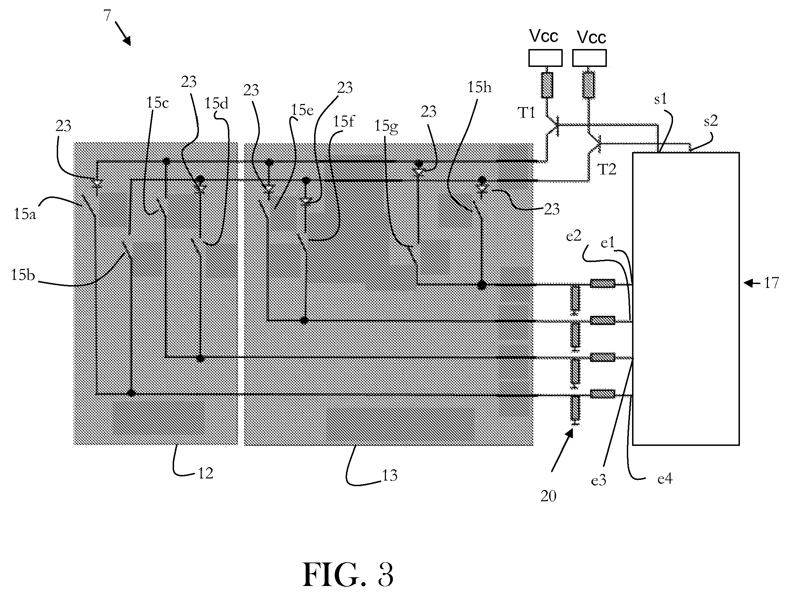

Selon un premier mode de réalisation représenté sur la figure 3, le microcontrôleur 17 comporte quatre entrées e1, e2, e3, e4 et deux sorties s1, s2 reliées à des commutateurs d'un module 7. Dans cet exemple, les commutateurs sont des interrupteurs qui peuvent prendre soit un état de commutation « ouvert », soit un état de commutation « fermé ».

Dans ce premier mode de réalisation, le module de commutation 7 possède deux sous-modules 12, 13 possédant chacun quatre interrupteurs.

Le module de commutation 7 est par exemple destiné à l'éclairage.

Le premier sous-module 12 est par exemple disposé en bout du module de commutation. Il comporte une première bague rotative et un bouton poussoir, pour la commande des feux de brouillard. La modification par l'utilisateur de la position angulaire de la première bague rotative et du bouton poussoir permettent de commuter quatre interrupteurs 15a, 15b, 15c, 15d pour la commande des feux de brouillard.

Deux interrupteurs sont reliés d'une part respectivement à deux sorties s1, s2 du microcontrôleur 17 et d'autre part, à une unique entrée du microcontrôleur 17.

Ainsi, dans le premier sous-module 12, les deux premiers interrupteurs 15a, 15b sont respectivement reliés d'une part aux deux sorties s1 et s2 et d'autre part à l'entrée e4. Les deux seconds interrupteurs 15c, 15d sont respectivement reliés d'une part aux deux sorties s1 et s2 et d'autre part à l'entrée e3.

Le second sous-module 13 est disposé entre l'ensemble de commutation et le premier sous-module de commutation. Il comporte par exemple une deuxième bague rotative, pour la commande des feux de veilleuse, position et phares. La modification par l'utilisateur de la position angulaire de la deuxième bague rotative permet de commuter quatre autres interrupteurs 15e, 15f, 15g, 15h, pour la commande des feux de veilleuse, position et phares.

Dans le second sous-module 13, les deux premiers interrupteurs 15e, 15f sont respectivement reliés d'une part aux deux sorties s1 et s2 et d'autre part à l'entrée e2. Les deux seconds interrupteurs 15g, 15h sont respectivement reliés d'une part aux deux sorties s1 et s2 et d'autre part à l'entrée e1.

Ainsi quatre entrées e1, e2, e3, e4 et deux sorties s1, s2 sont nécessaires pour déterminer les états de commutation des huit interrupteurs 15a à 15h, au lieu de huit sorties et huit entrées, sur chaque interrupteur. On diminue ainsi de façon importante le nombre de sorties du microcontrôleur et le câblage nécessaire pour déterminer les états de commutation des commutateurs.

Chaque sortie s1, s2 est reliée à un moyen de mise sous tension comprenant par exemple un transistor T1, T2, branché, via la résistance d'adaptation Rp, à une tension d'alimentation Vcc, via un régulateur 18 relié à une batterie 19, de manière qu'un signal numérique de sortie du microcontrôleur 17 permette d'amener un pulse de courant au module de commutation 7 pour la lecture des états de commutation des interrupteurs d'un module déterminé.

On prévoit également un filtre passe bas 20 devant chaque entrée e1, e2, e3, e4 du microcontrôleur 17 pour protéger les entrées e1, e2, e3, e4 du microcontrôleur 17.

Plus en détail, si le microcontrôleur 17 applique un signal logique " 1 " à la base d'un des transistors T1 ou T2, celui-ci est rendu passant et le potentiel Vcc est appliqué au module de commutation 7, permettant ainsi la lecture des états de commutation.

Ainsi, en recevant un signal depuis une sortie numérique s1, s2 du microcontrôleur 17, le module de commutation 7 recevant le signal est mis sous tension de façon à permettre la lecture des états de commutation des interrupteurs et en absence de ce signal, les pistes de connexions associées du module 7 possèdent un potentiel flottant.

Le microcontrôleur 17 est configuré de manière à délivrer ses signaux de sortie sur un réseau de communication, en particulier un bus de réseau 21 du type LIN ou CAN, via une interface 22 reliée à l'alimentation Vcc.

En outre, on dispose des diodes 23 entre les transistors T1 et T2 et les interrupteurs pour éviter que le courant injecté par les moyens de mise sous tension vers les interrupteurs retourne vers ceux-ci et pour éviter les interférences des interrupteurs reliés sur une même entrée de microcontrôleur.

Par exemple, sur les circuits électriques s1e1 et s2e1, entre les deux sorties s1 et s2 et l'entrée e1 du microcontrôleur 17, si les interrupteurs 15g et 15h sont fermés, les deux diodes 23, respectivement en amont des interrupteurs 15g et 15h, empêchent que le courant injecté en sortie s1 ou s2, ne revienne au niveau des transistors T1 ou T2 pour les endommager.

Les séquences sont ainsi envoyées successivement sur l'une et l'autre des deux sorties s1, s2.

Par exemple, et dans un premier temps, un signal numérique de sortie « 1 » est envoyé à la première sortie s1 du microcontrôleur 17 tandis qu'un signal numérique de sortie « 0 » est envoyé à la deuxième sortie s2.

Le moyen de mise sous tension comprenant le transistor T1, envoie alors un pulse de courant aux interrupteurs 15a, 15c, 15e, 15g. On scrute ensuite séquentiellement les quatre entrées e1, e2, e3, e4, du microcontrôleur 17.

Lorsque la position de commande appliquée par un utilisateur ferme tous les interrupteurs, aucun niveau de tension n'est alors reçu en entrée e1, e2, e3, e4, du microcontrôleur 17.

Lorsque la position de commande appliquée par l'utilisateur ouvre tous les interrupteurs, des niveaux de tension sont alors reçus sur toutes les entrées e1, e2, e3, e4, du microcontrôleur 17, qui transforme cette information en une information numérique.

Si une partie des interrupteurs sont ouverts en fonction de la position de commande appliquée par l'utilisateur, les niveaux de tension sont alors reçus sur les entrées correspondantes du microcontrôleur 17, qui transforme cette information en une information numérique. Dans ce dernier cas, une multitude d'information peut être codée.

Puis, dans un deuxième temps, un signal numérique de sortie « 0 » est envoyé à la première sortie s1 du microcontrôleur 17 tandis qu'un signal numérique de sortie « 1 » est envoyé à la deuxième sortie s2.

Le moyen de mise sous tension comprenant le transistor T2, envoie alors un pulse de courant aux interrupteurs 15b, 15d, 15f, 15h.

Puis, on envoie de nouveau un signal numérique de sortie « 1 » sur la première sortie s1 du microcontrôleur 17 tandis qu'un signal numérique de sortie « 0 » est envoyé à la deuxième sortie s2. On définit ainsi des séquences de signaux numériques, chaque séquence comportant un train d'impulsions envoyé successivement et alternativement sur chaque sortie.

Ainsi, le microcontrôleur 17 déduit à partir de la séquence de signaux numériques, par exemple « 01 », envoyés par le microcontrôleur 17 et des signaux numériques reçus par le microcontrôleur après qu'ils aient transité par le module de commutation 7, les huit états de commutation des huit interrupteurs 15a à 15h.

Ces deux étapes sont ensuite réalisées en direction de chaque emplacement pour chaque module de commutation branché audit emplacement de l'ensemble de commutation.

Le microcontrôleur 17 associe ensuite les informations numériques correspondant aux états de commutation, à une série de signaux de commande correspondants.

Il délivre ensuite les signaux de commande correspondants aux éléments devant être commandés.

Les possibilités de codage sont alors très élevées avec un câblage limité. Le système de commutation est donc simplifié, plus performant et présente un coût réduit.

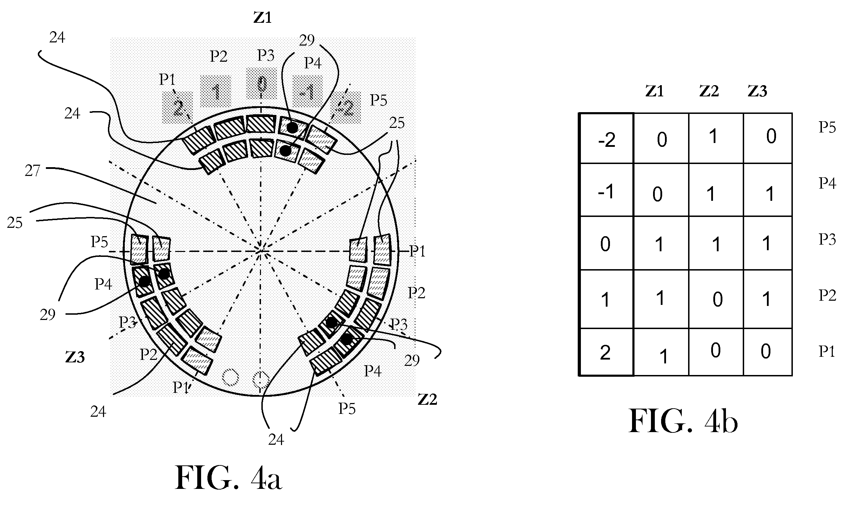

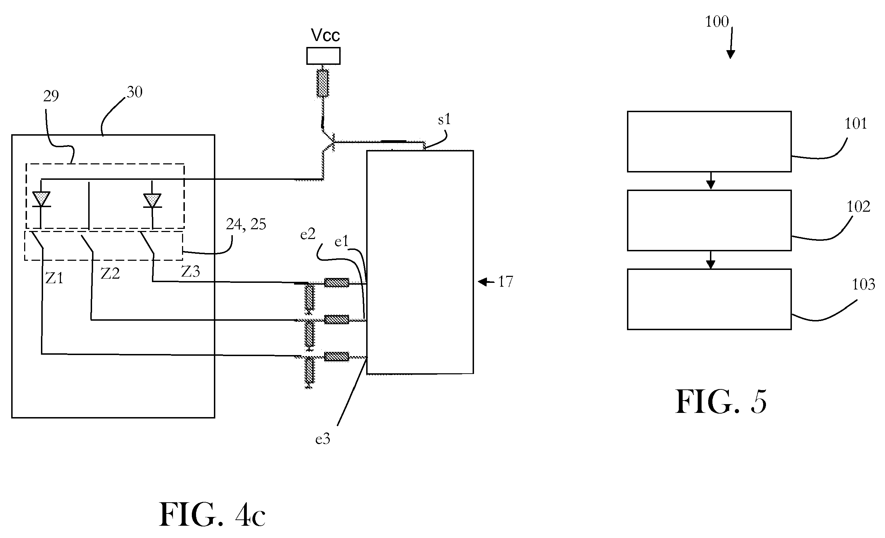

Selon un deuxième mode de réalisation illustré sur les figures 4a, 4b et 4c, le module de commutation comporte un sous-module 30 comprenant un commutateur muni un organe de commutation 29 correspondant, dont seules les extrémités de contactage de l'organe sont représentées sur la figure 4a.

L'organe de commutation 29 comporte par exemple un trépied rotatif apte à commuter simultanément trois éléments de contactage du commutateur pour définir un état de commutation du commutateur.

Les éléments de contactage comportent des plages de contactage 24 et des masses 25, inscrites dans une bande d'arc de cercle d'un support du module.

Les éléments de contactage sont doublés à l'exception d'une position centrale P3. Le doublage des éléments de contactage 24, 25 permet de sécuriser l'acheminement des signaux électriques en transit. Si un élément de contactage ou une ligne électrique du circuit électrique comprenant cet élément de contactage était défectueux, le deuxième élément de contactage (relié à un deuxième circuit électrique monté en parallèle) permet alors de pallier ce défaut.

L'organe de commutation 29 est mobile en rotation sur le support 27 et peut ainsi prendre cinq positions P1, P2, P3, P4, P5 angulairement décalées sur le support 27 pour commuter les éléments de contactage par contact frottant.

Chaque position P1, P2, P3, P4, P5 de l'organe de commutation 29 permet de définir ainsi cinq états de commutation, correspondants à la position angulaire du trépied sur les éléments de contactage.

Le microcontrôleur 17 comporte ainsi une sortie s1 et trois entrées e1, e2, e3 reliées au sous-module 30 du module de commutation. La sortie s1 est par exemple connectée à l'organe de commutation 29, et donc aux trois terminaisons du trépied et les trois entrées e1, e2, e3 sont connectées en parallèle aux éléments de contactage de chaque zone Z1, Z2, Z3 (l'organe de commutation 29 et les éléments de contactage 24, 25 sont schématisés par trois interrupteurs sur la figure 4c).

La position P1, P2, P3, P4, P5 de l'organe de commutation 29 définit ainsi une combinaison de contacts, permettant d'établir une information numérique correspondante en entrée du microcontrôleur 17 relative à un état de commutation du commutateur après que des signaux aient été envoyés dans le module de commutation.

Ainsi, dans chaque zone Z1, Z2, Z3 du support 27, représentées sur l'exemple des figures 4a et 4b, la position P1, P2, P3, P4, P5 de l'organe de commutation 29 peut définir cinq états de commutation : « 010 » ou « -2 », « 011 » ou « -1 », « 111 » ou « 0 », « 101 » ou « 1 », et « 100 » ou « 2 », par le positionnement de l'organe de commutation 29 soit sur une plage de contactage 24, soit sur la masse 25.

Ainsi dans la zone Z1 de la figure 4A, les éléments de contactage 24 et 25 sont disposés de manière que les positions P1, P2, P3, P4, P5 de l'organe de commutation définissent successivement un premier, un deuxième, un troisième contact fermé et un quatrième et un cinquième contact ouvert.

Egalement dans la zone Z2, les éléments de contactage 24 et 25 sont disposés de manière que les positions P1, P2, P3, P4, P5 de l'organe de commutation définissent successivement un premier et un deuxième contact ouvert et, un troisième, un quatrième et un cinquième contact fermé.

Et, dans la zone Z3, les éléments de contactage 24 et 25 sont disposés de manière que les positions P1, P2, P3, P4, P5 de l'organe de commutation définissent successivement un premier contact ouvert, puis un deuxième, un troisième, un quatrième contact fermé et un cinquième contact fermé.

Sur le tableau correspondant de la figure 4b, on comprend que chaque position P1, P2, P3, P4, P5 de l'organe de commutation 29 définit simultanément une combinaison de plusieurs contacts relatifs à chacune des trois zones Z1, Z2, Z3, permettant de définir par une information numérique correspondante à un état de commutation.

Par exemple, un signal numérique de sortie « 1 » est envoyé à la première sortie du microcontrôleur 17 tandis qu'un signal numérique de sortie « 0 » est envoyé à la deuxième sortie.

Le moyen de mise sous tension envoie alors un pulse de courant dans l'organe de commutation 29. On scrute ensuite séquentiellement les trois entrées e1, e2, e3, du microcontrôleur 17.

Si l'utilisateur positionne l'organe de commande 29 en position P4 (figure 4a), alors aucun niveau de tension n'est reçu sur l'entrée e3 du microcontrôleur 17 correspondant à la zone Z1, et un niveau de tension est reçu sur les deux entrées e1 et e2 du microcontrôleur 17 correspondantes aux zones Z2 et Z3. Le microcontrôleur 17 transforme ensuite cette information en une information numérique.

Ainsi, l'information « -1 », codée par l'information numérique « 011 » correspond à une position P4 de l'organe de commutation 29 définissant simultanément un contact ouvert dans une première zone Z1, un contact fermé dans une deuxième zone Z2 et un contact fermé dans une troisième zone Z3. Cette position est représentée sur la figure 4a par le positionnement des extrémités de l'organe de commutation 29 sur les plages de contactage 24 des zones Z2 et Z3 et sur les masses 25 de la zone Z1.

La table de vérité correspondante aux autres positions possibles de l'organe de commutation 29 est représentée sur le tableau de la figure 4b et illustre ainsi les cinq combinaisons «010», «011», « 111 », « 101 » et « 100 » des états de commutation correspondants aux cinq positions P1, P2, P3, P4, P5 de l'organe de commutation 29.

Ainsi, ledit microcontrôleur 17 déduit à partir de la séquence de signaux numériques, par exemple « 01 », envoyés par le microcontrôleur 17 et des signaux numériques reçus par ledit microcontrôleur après qu'ils aient transité par le module de commutation, l'état de commutation du commutateur.

On peut aussi par exemple envisager plusieurs sous-modules dans le module de commutation, montés sur plusieurs éléments rotatifs associés.

On envoie alors une séquence de signaux numériques sur une deuxième sortie en direction d'un autre sous-module du module de commutation, puis pour chaque module de commutation branché à un emplacement de l'ensemble de commutation.

Le microcontrôleur associe les informations numériques correspondant aux états de commutation, à une série de signaux de commande correspondants.

Il délivre ensuite les signaux de commande correspondants aux éléments devant être commandés.

En outre, les plages de contactage 24 sont disposées de manière que les états de commutation soient fermés dans une position centrale P3 de l'organe de commutation, correspondant à l'information numérique « 0 » dans l'exemple de la figure 4a, ou « 111 » sur la ligne correspondante du tableau de la figure 4b, pour réaliser un test de fonctionnement du module de commutation.

En fonctionnement, le procédé de commande 100 peut être mise en oeuvre comme représenté par la figure 5.

Dans une première étape 101 du procédé 100, on envoie à tour de rôle et périodiquement pour chaque emplacement E1, E2, E3, E4 une séquence de signaux numériques en sorties s1, s2 du microcontrôleur 17.

Puis, au cours d'une deuxième étape 102, on reçoit depuis chaque emplacement E1, E2, E3, E4, en entrée e1, e2 dudit microcontrôleur 17, des signaux électriques correspondants ayant transités par un module de commutation.

On déduit à partir des séquences de signaux numériques envoyés et des signaux numériques correspondants reçus, au moins un état de commutation d'un commutateur branché à un emplacement E1, E2, E3, E4.

Au cours de la deuxième étape 102, on déduit également à partir des séquences de signaux numériques envoyés et des signaux numériques correspondants reçus, au moins un identifiant associé à l'emplacement E1, E2, E3, E4 du module 7.

Au cours de la deuxième étape 102, on mémorise l'état de commutation d'une deuxième étape 102 précédente, on compare l'état de commutation avec l'état de commutation mémorisé, et en cas de changement de l'état de commutation, on réitère la deuxième étape 102, jusqu'à ce que l'état de commutation soit identique au moins à celui mémorisé.

On réitère ainsi l'étape de détermination de l'état de commutation trois fois de suite lorsqu'un changement d'état de commutation est déterminé afin de s'assurer que l'utilisateur a bien souhaité un changement d'état avant de rendre celui-ci effectif.

Ensuite, dans une troisième étape 103, on associe les états de commutation à une série de signaux de commande correspondants et on délivre les signaux de commande correspondants aux éléments devant être commandés pour par exemple commander l'essuyage par intermittence des essuie-glaces et enfin on réitère les étapes 101, 102, 103.

On obtient ainsi un ensemble de commande simplifié et plus performant, pouvant être facilement standardisé et dans lequel on peut facilement raccorder plusieurs modules optionnels à l'ensemble de commutation.

## Revendications

1. Ensemble de commutation pour haut de colonne de direction de véhicule automobile comportant :
- un support de base (5) possédant une pluralité d'emplacements (E1, E2, E3, E4) pouvant être reliés à des connecteurs de module de commutation (7), chaque module de commutation (7) ayant au moins un commutateur (15) pouvant prendre un état de commutation en fonction de la position de commande appliquée par un utilisateur,
- un microcontrôleur (17) de gestion de l'ensemble de commutation,
**caractérisé en ce que** chaque emplacement (E1, E2, E3, E4) comprend au moins deux entrées numériques reliées à des mêmes sorties numériques (s1, s2) dudit microcontrôleur (17) et au moins deux sorties numériques reliées à des mêmes entrées numériques (e1, e2, e3, e4) dudit microcontrôleur (17), et **en ce que** ledit microcontrôleur (17) est configuré de manière à pouvoir déduire à partir d'une séquence de signaux numériques envoyés par ledit microcontrôleur (17) en direction de chaque emplacement et des signaux numériques reçus par ledit microcontrôleur (17) depuis chaque emplacement (E1, E2, E3, E4) et correspondant à des signaux électriques ayant transités par un module de commutation branché à un emplacement, au moins un état de commutation d'un commutateur dudit module de commutation.

2. Ensemble de commutation selon la revendication 1, **caractérisé en ce que** chaque emplacement (E1, E2, E3, E4) possède le même nombre prédéfini de plages de connexions.

3. Ensemble de commutation selon l'une quelconque des revendications 1 ou 2, **caractérisé en ce que** le microcontrôleur (17) est configuré pour recevoir une information numérique comportant en outre un identifiant (ID) associé à l'emplacement (E1, E2, E3, E4) dudit module (7).

4. Ensemble de commande pour haut de colonne de direction de véhicule automobile **caractérisé en ce qu'**il comporte un ensemble de commutation selon l'une quelconque des revendications 1 à 3 et au moins un module de commutation (7) branché à un emplacement (E1, E2, E3, E4) de l'ensemble de commutation, ledit module (7) ayant au moins un commutateur (15) pouvant prendre un état de commutation en fonction d'une position de commande appliquée par un utilisateur.

5. Ensemble de commande selon la revendication 4, **caractérisé en ce qu'**un nombre prédéfini de commutateurs (15a, 15b) d'un module de commutation (7) sont reliés d'une part respectivement à un nombre identique de sorties (s1, s2) dudit microcontrôleur (7) et d'autre part, à une unique entrée (e1) dudit microcontrôleur (17).

6. Ensemble de commande selon l'une quelconque des revendications 4 ou 5, **caractérisé en ce que** le commutateur du module de commutation (7) comporte des éléments de contactage (24, 25) et un organe de commutation (29) correspondant, la position (P1, P2, P3, P4, P5) de l'organe de commutation (29) définissant une combinaison de contacts permettant de définir une information numérique correspondante à un état de commutation du commutateur en entrée dudit microcontrôleur (17).

7. Ensemble de commande selon la revendication 6, **caractérisé en ce que** les éléments de contactage (24, 25) sont inscrits dans une bande d'arc de cercle d'un support (27) dudit module (7) et ledit organe de commutation (29) est monté rotatif sur ledit support (27).

8. Ensemble de commande selon l'une quelconque des revendications 6 ou 7, **caractérisé en ce que** les éléments de contactage (24, 25) sont doublés pour chaque position (P1, P2, P4, P5) de l'organe de commutation à l'exception d'une position centrale (P3).

9. Ensemble de commande selon la revendication 8, **caractérisé en ce que** les éléments de contactage (24, 25) sont disposés de manière que les états de commutation soient fermés dans une position centrale (P3) de l'organe de commutation, pour réaliser un test de fonctionnement dudit module (7).

10. Procédé de commande pour haut de colonne de direction de véhicule automobile **caractérisé en ce qu'**il comporte un ensemble de commande selon l'une quelconque des revendications 4 à 9 pour la mise en oeuvre des étapes suivantes :
- une première étape (101) dans laquelle on envoie à tour de rôle et périodiquement pour chaque emplacement une séquence de signaux numériques par ledit microcontrôleur,
- une deuxième étape (102) dans laquelle on reçoit depuis chaque emplacement, par ledit microcontrôleur, des signaux numériques correspondants associés à des signaux électriques ayant transités par un module de commutation branché sur ledit emplacement et on déduit à partir desdites séquences de signaux numériques envoyés et desdits signaux numériques correspondants reçus, au moins un état de commutation d'un commutateur dudit module de commutation,
- une troisième étape (103) dans laquelle on associe les états de commutation à une série de signaux de commande correspondants et on délivre les signaux de commande correspondants aux éléments devant être commandés et,
- on réitère lesdites étapes (101, 102, 103).

11. Procédé de commande selon la revendication 10, **caractérisé en ce qu'**au cours de la deuxième étape (102), on déduit également à partir desdites séquences de signaux numériques envoyés et desdits signaux numériques correspondants reçus, au moins un identifiant associé à l'emplacement dudit module.

12. Procédé de commande selon l'une quelconque des revendications 10 ou 11, **caractérisé en ce qu'**au cours de la deuxième étape (102), on mémorise l'état de commutation d'une deuxième étape (102) précédente, on compare l'état de commutation avec l'état de commutation mémorisé, et **en ce qu'**en cas de changement de l'état de commutation, on réitère la deuxième étape (102), jusqu'à ce que l'état de commutation soit identique au moins à celui mémorisé.

## Patentansprüche

1. Schalteinheit für das obere Ende einer Kraftfahrzeug-Lenksäule, die aufweist:
- einen Basisträger (5), der eine Vielzahl von Einbaustellen (E1, E2, E3, E4) besitzt, die mit Schaltmodul-Verbindern (7) verbunden sein können, wobei jedes Schaltmodul (7) mindestens einen Schalter (15) hat, der abhängig von der von einem Benutzer angewendeten Steuerstellung einen Schaltzustand annehmen kann,
- einen Mikrocontroller (17) zur Verwaltung der Schalteinheit,
**dadurch gekennzeichnet, dass** jede Einbaustelle (E1, E2, E3, E4) mindestens zwei digitale Eingänge, die mit gleichen digitalen Ausgängen (s1, s2) des Mikrocontrollers (17) verbunden sind, und mindestens zwei digitale Ausgänge enthält, die mit gleichen digitalen Eingängen (e1, e2, e3, e4) des Mikrocontrollers (17) verbunden sind, und dass das Mikrocontroller (17) so konfiguriert ist, dass er ausgehend von einer Folge von vom Mikrocontroller (17) an jede Einbaustelle gesendeten digitalen Signalen und von den digitalen Signalen, die vom Mikrocontroller (17) von jeder Einbaustelle (E1, E2, E3, E4) empfangen werden und elektrischen Signalen entsprechen, die ein an eine Einbaustelle angeschlossenes Schaltmodul durchquert haben, mindestens einen Schaltzustand eines Schalters des Schaltmoduls ableiten kann.

2. Schalteinheit nach Anspruch 1, **dadurch gekennzeichnet, dass** jede Einbaustelle (E1, E2, E3, E4) die gleiche vordefinierte Anzahl von Verbindungsbereichen besitzt.

3. Schalteinheit nach einem der Ansprüche 1 oder 2, **dadurch gekennzeichnet, dass** der Mikrocontroller (17) konfiguriert ist, eine digitale Information zu empfangen, die außerdem eine der Einbaustelle (E1, E2, E3, E4) des Moduls (7) zugeordnete Kennung (ID) aufweist.

4. Steuereinheit für das obere Ende einer Kraftfahrzeug-Lenksäule, **dadurch gekennzeichnet, dass** sie eine Schalteinheit nach einem der Ansprüche 1 bis 3 und mindestens ein Schaltmodul (7) aufweist, das an eine Einbaustelle (E1, E2, E3, E4) der Schalteinheit angeschlossen ist, wobei das Modul (7) mindestens einen Schalter (15) hat, der abhängig von einer von einem Benutzer angewendeten Steuerstellung einen Schaltzustand annehmen kann.

5. Steuereinheit nach Anspruch 4, **dadurch gekennzeichnet, dass** eine vordefinierte Anzahl von Schaltern (15a, 15b) eines Schaltmoduls (7) einerseits mit einer gleichen Anzahl von Ausgängen (s1, s2) des Mikrocontrollers (7) bzw. andererseits mit einem einzigen Eingang (e1) des Mikrocontrollers (17) verbunden sind.

6. Steuereinheit nach einem der Ansprüche 4 oder 5, **dadurch gekennzeichnet, dass** der Schalter des Schaltmoduls (7) Kontaktierelemente (24, 25) und ein entsprechendes Schaltorgan (29) aufweist, wobei die Stellung (P1, P2, P3, P4, P5) des Schaltorgans (29) eine Kombination von Kontakten definiert, die es ermöglicht, eine digitale Information zu definieren, die einem Schaltzustand des Schalters am Eingang des Mikrocontrollers (17) entspricht.

7. Steuereinheit nach Anspruch 6, **dadurch gekennzeichnet, dass** die Kontaktierelemente (24, 25) in ein Kreisbogenband eines Trägers (27) des Moduls (7) eingeschrieben sind und das Schaltorgan (29) drehbar auf den Träger (27) montiert ist.

8. Steuereinheit nach einem der Ansprüche 6 oder 7, **dadurch gekennzeichnet, dass** die Kontaktierelemente (24, 25) für jede Stellung (P1, P2, P4, P5) des Schaltorgans mit Ausnahme einer zentralen Stellung (P3) verdoppelt sind.

9. Steuereinheit nach Anspruch 8, **dadurch gekennzeichnet, dass** die Kontaktierelemente (24, 25) so angeordnet sind, dass die Schaltzustände in einer zentralen Stellung (P3) des Schaltorgans geschlossen sind, um einen Funktionstest des Moduls (7) durchzuführen.

10. Steuerverfahren für das obere Ende einer Kraftfahrzeug-Lenksäule, **dadurch gekennzeichnet, dass** es eine Steuereinheit nach einem der Ansprüche 4 bis 9 zur Durchführung der folgenden Schritte aufweist:
- einen ersten Schritt (101), in dem der Reihe nach und periodisch für jede Einbaustelle eine Folge von digitalen Signalen durch den Mikrocontroller gesendet wird,
- einen zweiten Schritt (102), in dem von jeder Einbaustelle durch den Mikrocontroller entsprechende digitale Signale empfangen werden, die elektrischen Signalen zugeordnet sind, welche ein Schaltmodul durchquert haben, das an die Einbaustelle angeschlossen ist, und ausgehend von den gesendeten Folgen digitaler Signale und den entsprechenden empfangenen Signalen mindestens ein Schaltzustand eines Schalters des Schaltmoduls abgeleitet wird,
- einen dritten Schritt (103), in dem die Schaltzustände einer Reihe von entsprechenden Steuersignalen zugeordnet werden und die entsprechenden Steuersignale an die Elemente geliefert werden, die gesteuert werden sollen, und
- die Schritte (101, 102, 103) wiederholt werden.

11. Steuerverfahren nach Anspruch 10, **dadurch gekennzeichnet, dass** während des zweiten Schritts (102) ebenfalls ausgehend von den Folgen von gesendeten digitalen Signalen und den entsprechenden empfangenen digitalen Signalen mindestens eine Kennung abgeleitet wird, die der Einbaustelle des Moduls zugeordnet ist.

12. Steuerverfahren nach einem der Ansprüche 10 oder 11, **dadurch gekennzeichnet, dass** während des zweiten Schritts (102) der Schaltzustand eines zweiten vorhergehenden Schritts (102) gespeichert wird, der Schaltzustand mit dem gespeicherten Schaltzustand verglichen wird, und dass im Fall einer Änderung des Schaltzustands der zweite Schritt (102) wiederholt wird, bis der Schaltzustand mindestens gleich dem gespeicherten ist.

## Claims

1. Switching assembly for the top of a steering column of a motor vehicle comprising:
- a basic support (5) having a plurality of locations (E1, E2, E3, E4) that can be connected to switching module (7) connectors, each switching module (7) having at least one switch (15) that can adopt a switching state depending on the control position applied by a user,
- a microcontroller (17) for managing the switching assembly,
**characterized in that** each location (E1, E2, E3, E4) comprises at least two digital inputs connected to identical digital outputs (s1, s2) of said microcontroller (17) and at least two digital outputs connected to identical digital inputs (e1, e2 e3, e4) of said microcontroller (17) and **in that** said microcontroller (17) is configured so as to be able to deduce from a sequence of digital signals sent by said microcontroller (17) to each location and digital signals received by said microcontroller (17) from each location (E1, E2, E3, E4) and corresponding to electric signals having passed through a switching module plugged into a location, at least one switching state of a switch of said switching module.

2. Switching assembly according to Claim 1, **characterized in that** each location (E1, E2, E3, E4) has the same predefined number of lands.

3. Switching assembly according to either one of Claims 1 and 2, **characterized in that** the microcontroller (17) is configured to receive an item of digital information also comprising an identifier (ID) associated with the location (E1, E2, E3, E4) of said module (7).

4. Control assembly for the top of a steering column of a motor vehicle, **characterized in that** it comprises a switching assembly according to any one of Claims 1 to 3, and at least one switching module (7) plugged into a location (E1, E2, E3, E4) of the switching assembly, said module (7) having at least one switch (15) that can adopt a switching state according to a control position applied by a user.

5. Control assembly according to Claim 4, **characterized in that** a predefined number of switches (15a, 15b) of a switching module (7) are connected on the one hand respectively to an identical number of outputs (s1, s2) of said microcontroller (7) and, on the other hand, to a single input (e1) of said microcontroller (17).

6. Control assembly according to either one of Claims 4 and 5, **characterized in that** the switch of the switching module (7) comprises contacting elements (24, 25) and a corresponding switching member (29), the position (P1, P2, P3, P4, P5) of the switching member (29) defining a combination of contacts making it possible to define an item of digital information corresponding to a switching state of the switch at the input of said microcontroller (17).

7. Control assembly according to Claim 6, **characterized in that** the contacting elements (24, 25) are inscribed in an arc of a circle band of a support (27) of said module (7) and said switching member (29) is mounted rotatably on said support (27).

8. Control assembly according to either one of Claims 6 and 7, **characterized in that** the contacting elements (24, 25) are duplicated for each position (P1, P2, P4, P5) of the switching member with the exception of a central position (P3).

9. Control assembly according to Claim 8, **characterized in that** the contacting elements (24, 25) are placed so that the switching states are closed in a central position (P3) of the switching member in order to carry out an operating test of said module (7).

10. Control method for the top of a steering column of a motor vehicle, **characterized in that** it comprises a control assembly according to any one of Claims 4 to 9 for the application of the following steps:
- a first step (101) in which, in turn and periodically for each location, a sequence of digital signals is sent via said microcontroller,
- a second step (102) in which, from each location, corresponding digital signals are received via said microcontroller, which signals being associated with electric signals that have passed through a switching module plugged into said location and, from said sequences of digital signals sent and from said corresponding digital signals received, at least one switching state of a switch of said switching module is deduced,
- a third step (103) in which the switching states are associated with a series of corresponding control signals and the corresponding control signals are delivered to the elements that are to be controlled and,
- said steps (101, 102, 103) are reiterated.

11. Control method according to Claim 10, **characterized in that**, during the second step (102), also deduced from said sequences of digital signals sent and from said corresponding digital signals received, is at least one identifier associated with the location of said module.

12. Control method according to either one of Claims 10 and 11, **characterized in that**, during the second step (102), the switching state of a second preceding step (102) is stored, the switching state is compared with the stored switching state, and **in that** if there is a change of switching state, the second step (102) is reiterated until the switching state is at least identical to that stored.
